# EUROPEAN PATENT SPECIFICATION

(11) **EP 4 053 524 B1**
(45) Date of publication and mention of the grant of the patent: **17.04.2024**
(21) Application number: 21160754.4
(22) Date of filing: 04.03.2021
(51) Int. Cl.: G01K 1/02, G01K 3/08, G01K 7/01, G01K 15/00, H01L 27/146

(54) **TEMPERATURE MEASUREMENT CIRCUIT WITH MULTIPLE DISTRIBUTED SMALL LOW-POWER TEMPERATURE SENSORS**
TEMPERATURMESSSCHALTUNG MIT MEHREREN VERTEILTEN KLEINEN TEMPERATURSENSOREN MIT GERINGER LEISTUNG
CIRCUIT DE MESURE DE LA TEMPÉRATURE À L'AIDE DE PLUSIEURS CAPTEURS DE TEMPÉRATURE DISTRIBUÉS, DE PETITE TAILLE ET DE FAIBLE PUISSANCE

(43) Date of publication of application: 07.09.2022
(73) Proprietor: Shenzhen Goodix Technology Co., Ltd., Shenzhen, Guangdong 518045 (CN)
(72) Inventor: POWELL, Matthew, San Diego, California 92121 (US); VAN DER VELDEN, Franciscus Petrus Antonius, 5582 CK Waalre (NL); WEI, Dazhi, San Diego, California 92121 (US)
(74) Representative: Nederlandsch Octrooibureau

(56) References cited:
- WO-A1-2016/137647
- US-A1- 2009 285 261
- XIE SHUANG ET AL: "Compensation for Process and Temperature Dependency in a CMOS Image Sensor", SENSORS, vol. 19, no. 4, 1 February 2019 (2019-02-01), page 870, XP055831687, CH ISSN: 1424-8220, DOI: 10.3390/s19040870

## Description

### Field of the invention

The present invention relates to a semiconductor chip with an integrated temperature measurement circuit and an integrated image sensor circuit.

### Background art

Temperature sensors in integrated circuits are quite common to measure the environmental temperature of the chip and also to measure the temperature at different locations within the chip. In many applications, the temperature sensor used is a Bipolar Junction Transistor (BJT) configured as a diode. By applying a constant DC-current trough the BJT, a diode voltage is generated which can be used to measure the diode temperature. The diode voltage is translated to a digital value using an Analog-to-Digital Convertor (ADC).

WO 2016/137647 A1 and US 2009/285261 A1 disclose an integrated circuit chip comprising a plurality of integrated temperature sensors each connected to a central monitoring circuit comprising a multiplexer, a current source, and an ADC. XIE SHUANG ET AL: "Compensation for Process and Temperature Dependency in a CMOS Image Sensor", SENSORS, vol. 19, no. 4, 1 February 2019, page 870, XP055831687 discloses the implementation of temperature sensitive pixels (working as temperature sensors) in a CMOS Image Sensor to compensate for temperature dependencies of the dark current, dark signal, and gain conversion.

### Summary of the invention

The present invention seeks to provide an improved temperature measurement circuit, which allows easy integration in an integrated circuit on a semiconductor chip, yet provides a high accuracy measurement result.

According to the present invention, a semiconductor chip is provided, comprising a semiconductor image sensor circuit and a temperature measurement circuit, wherein the temperature measurement circuit is integrated in the semiconductor chip and comprises: a plurality of local temperature sensors and a central processing unit connected to the plurality of local temperature sensors via respective integrated wiring structures in the semiconductor chip. The central processing unit comprises a control logic unit, and an analog-to-digital converter, ADC, circuit for providing digital measurement output data. The control logic unit is connected to the ADC circuit and arranged to select one or more of the plurality of local temperature sensors and execute a measurement cycle for the selected one or more of the plurality of local temperature sensors, wherein the plurality of local temperature sensors is distributed at a perimeter of the semiconductor image sensor circuit.

Using the present invention embodiments, having multiple local temperature sensors and a central processing unit, it is possible to measure with high accuracy the local temperature of the semiconductor chip in the vicinity of the semiconductor sensor circuit, and by repeating this for each of the plurality of local temperature sensors, obtain precise and full measurement data.

In a further group of embodiments, the temperature measurement circuit further comprises a central temperature sensor connected to the central processing unit. This allows to further improve the accuracy of the temperature measurement circuit, as it allows to properly calibrate the plurality of local temperature sensors.

### Short description of drawings

The present invention will be discussed in more detail below, with reference to the attached drawings, in which
Fig. 1 shows a circuit diagram of an embodiment of a local temperature sensor as applied in present invention embodiments of the temperature measurement circuit;
Fig. 2 shows a simplified circuit diagram of an embodiment of a temperature measurement circuit connected to one local temperature sensor;
Fig. 3 shows a circuit diagram of a part of a multiplexer circuit as implemented in an embodiment of the present invention;
Fig. 4 shows a schematic diagram of a central processing unit as implemented in a further embodiment of the present invention;
Fig. 5A and 5B show top views of a semiconductor chip in which exemplary embodiments of the present invention are illustrated.

### Description of embodiments

The present invention embodiments described herein are especially applicable and useful for temperature measurement in semiconductor chips, notably those having a large sensor surface. E.g. the present invention embodiments of the temperature measurement circuit may be used inside a CMOS Image Sensor (CIS) chip. The dark current generation in a CMOS image sensor is very important for image quality and is also very sensitive to the die temperature in different regions of the sensor array.

In prior art implementations, cancellation methods are applied to remove the average dark current in the sensor array, but it is much more difficult when the temperature and corresponding dark current varies over the sensor array. By capturing the temperature at multiple locations on the die/ semiconductor chip, it is possible to obtain knowledge on the thermal gradients on the die. This is useful to improve thermal gradients in future designs or to improve the package design for the existing product. It is also possible to use this information to perform a much more accurate dark current cancellation. In the present invention embodiments, the temperature is measured at different points on the die using multiple temperature sensors or sensor elements. The measured temperature and temperature distribution may be used to improve the image quality of the image (or video) captured by the image sensor.

The application area of the present invention embodiments is useful in any CIS semiconductor chip where distributed temperature information is useful, or, while not forming part of the invention, even any integrated semiconductor chip where this is an interesting problem (large, high power digital chips for example).

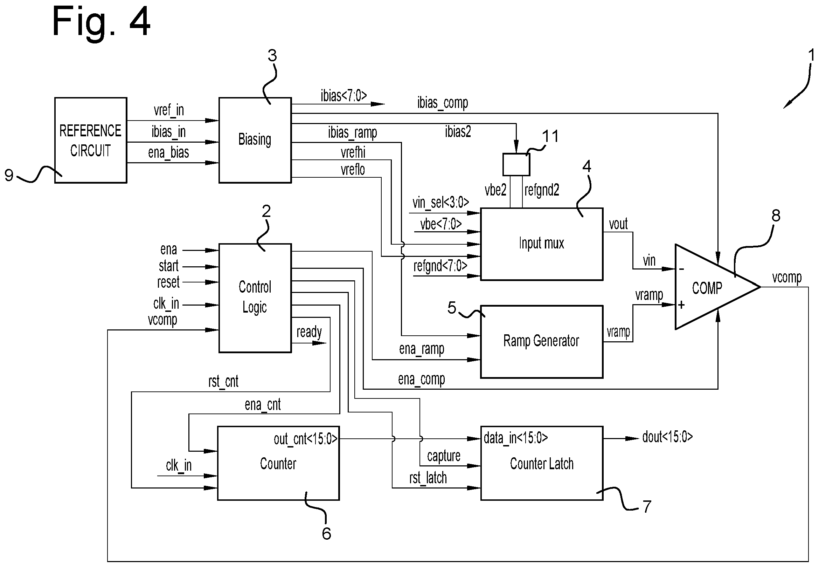

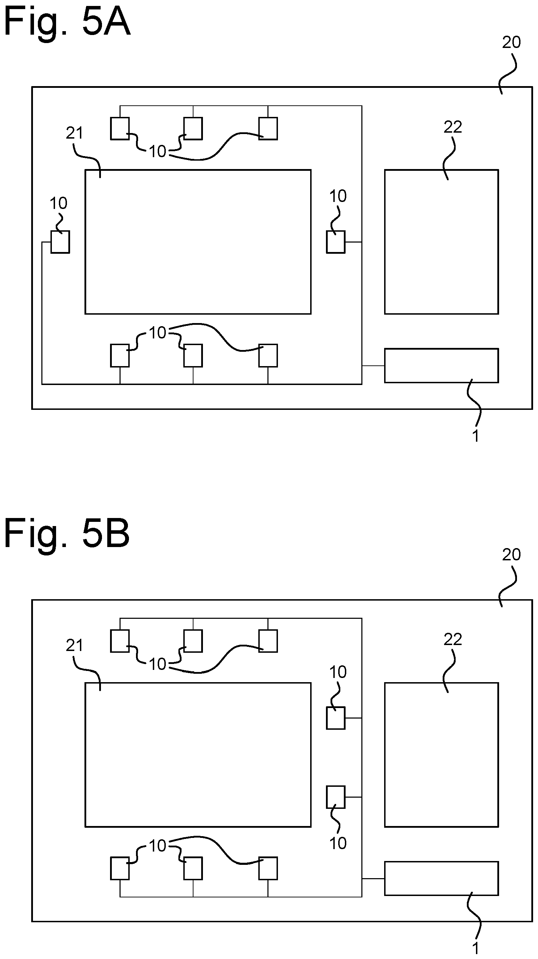

Fig. 5A shows a top view of a semiconductor chip 20 in which exemplary embodiments of the present invention are illustrated. The semiconductor chip 20 comprises a semiconductor sensor circuit 21 and a further integrated circuit part 22, e.g. integrated signal processing electronics. In addition, a plurality of local temperature sensors 10 is present, located around a perimeter of the semiconductor sensor circuit 21, and connected to a central processing unit 1. In generic wording, the present invention relates to a temperature measurement circuit integrated in a semiconductor chip 20 comprising a plurality of local temperature sensors 10, and a central processing unit 1 connected to the plurality of local temperature sensors 10 via respective integrated wiring structures 15 in the semiconductor chip 20. The central processing unit 1 comprises a control logic unit 2 and an analog-to-digital converter, ADC, circuit 4-8 for providing digital measurement output data (see Fig. 4 and description thereof below for more details). The control logic unit 2 is connected to the ADC circuit 4-8 and arranged to select one or more of the plurality of local temperature sensors 10 and execute a measurement cycle for the selected one or more of the plurality of local temperature sensors 10. Using the present invention embodiments, having multiple local temperature sensors 10 and a central processing unit 1, it is possible to measure with high accuracy the local temperature of the semiconductor chip 20 in the vicinity of the semiconductor sensor circuit 21, and by repeating this for each of the plurality of local temperature sensors 10, obtain precise and full measurement data.

In a further group of embodiments, the temperature measurement circuit further comprises a central temperature sensor 11 connected to the central processing unit 1. As shown in the embodiment of Fig. 4, such a central temperature sensor 11 may be an integral part of (co-located) of the central processing unit 1 implemented in the semiconductor chip 20. This central temperature sensor 11 can be used to improve the accuracy of temperature measurements of the selected one or more of the plurality of local temperature sensors 10, e.g. by using a central temperature measurement for calibration purposes (see also further exemplary embodiments described below). Fig. 4 shows a schematic diagram of a central processing unit 1 as implemented in a further embodiment of the present invention, comprising the control logic unit 2, a reference circuit 9, a biasing unit 3, an ADC circuit (with input multiplexer 4, ramp generator 5, counter 6, counter latch 7 and comparator 8, to be discussed in further detail below), and an optional central temperature sensor 11. Also indicated in the Fig. 4 embodiment are the specific interconnections with signal names, and input and output signals, as used herein.

In prior art applications, a temperature sensor integrated in a semiconductor chip often is formed by a bipolar Junction Transistor (BJT) configured as a diode. By applying a constant DC-current through the BJT, a diode voltage is generated which can be used to measure the diode temperature. The diode voltage is translated to a digital value using an Analog-to-Digital Convertor (ADC).

To measure the temperature at different locations on the semiconductor chip, several temperature sensors are placed on the chip. If an ADC is applied for each temperature sensor present, the total area and power consumption of the collective temperature measurement circuits might increase rapidly. In the present invention embodiments, therefor one central ADC circuit 4-8 is used that can handle a multiple number of the plurality of local temperature sensors 10 integrated in the semiconductor chip 20.

A simple BJT based temperature sensor has a potential accuracy problem. BJT based solutions have a large variable offset. In a production calibration process it is possible to measure this offset and store the associated data on the semiconductor chip. However, this limits the temperature sensor performance accuracy to the accuracy of the production calibration operation. The present invention embodiments provide a good mechanism to improve the temperature measurement performance, as will be discussed in further detail below.

Furthermore, when the BJT is biased, it might emit light, which can be picked up by the semiconductor sensor circuit 21. This is, of course, something that needs to be avoided. Therefore, in the present invention embodiments, the BJT's are only biased when the semiconductor sensor circuit 21 is not capturing an image.

It is noted that when placing the temperature sensors far away from the central ADC circuit 4-8, it is possible that a voltage drop occurs over the connections which influences the accuracy of the temperature measurement. Another problem might be crosstalk that might be picked up by long conductors between the local temperature sensor 10 and the ADC circuit 4-8. Last, but not least, it is advantageous to reduce the number of wires between the central ADC circuit 4-8 and the distributed local temperature sensors 10 to a minimum.

In a further embodiment, the central processing unit 1 further comprises a bias circuit 3 connected to the plurality of local temperature sensors 10 and the control logic unit 2, wherein the central processing unit 1 is further arranged to execute a measurement cycle by providing a bias current from the bias circuit 3 to the selected one or more of the plurality of local temperature sensors 10, and measuring a sensor signal from the selected one or more of the plurality of local temperature sensors 10. By also applying a (single) bias circuit 3 which supplies a predetermined bias current to the selected ones of the local temperature sensors 10, a more precise measurement is possible with limited additional circuitry integrated in the semiconductor chip 20.

In an exemplary embodiment of the present invention, each of the plurality of local temperature sensors 10 comprises a bipolar junction transistor, BJT 10. As a result, small dimension sensors can be used and easily integrated in the semiconductor chip 20. Also, this allows to implement small temperature sensors using only two metal layers in an integrated circuit design.

In an even further embodiment of the present invention, the BJT 10 is configured as a diode by a connection between base and collector, a bias input terminal ibias connected to an emitter of the BJT 10, a sense terminal vbe connected to the emitter of the BJT 10, a reference ground terminal refgnd connected to the base of the BJT 10, a first ground terminal agnd connected to the base of the BJT 10, and a second ground terminal subgnd connected to the collector of the BJT 10. Note that in this embodiment, the first ground terminal agnd and second ground terminal subgnd are connected together. The (PNP) Bipolar Junction Transistors 10 are configured as diode by connecting the base and collector to the same potential. A bias current ibias is steered into the emitter of the BJT 10 (but only when the specific BJT is selected to be measured by the ADC circuit 4-8. The diode voltage is then e.g. sampled onto a sampling capacitor and held during the ADC conversion.

In the exemplary embodiment shown in Fig. 4, eight local temperature sensors 10 are used, and the sensor signal is converted one by one into a 16-bit digital value, by an ADC circuit 4-8 in the form of a slope type of converter. Such a slope type of converter can be easily included in the central processing unit 1 on the semiconductor chip 20. Having the ADC circuit 4-8 embodied with a 16 bit resolution output provides for high accuracy measurement data.

As mentioned in an embodiment above, the bias current that is steered into the emitter of the BJT 10 is generated by the bias circuit 3. By using the same current source, for all of the plurality of local temperature sensors 10, there is no mismatch between the currents that is used for each one of the plurality of local temperature sensors 10, i.e. different temperature sensors 10. The bias current that is steered into the BJT 10 is derived from a reference current ibias_in provided by a reference circuit 9. The reference circuit 9 is e.g. implemented as a bandgap circuit in which a trimmed reference voltage and a trimmed bias is generated.

In a further embodiment, the central processing unit 1 is further arranged to execute a calibration step for all of the plurality of local temperature sensors 10 during a production calibration mode of operation of the semiconductor chip 20. This obtains a central temperature sensor measurement circuit that provides high accuracy temperature data.

Using such operational steps, and possibly further algorithm based processing, it is possible to achieve enhanced sensor performance using an algorithm based approach. In a production calibration mode, or any low power mode of the chip, it is possible to measure the temperature result in the high accuracy central processing unit 1, and then also measure the temperature sensor result in all the distributed plurality of local temperature sensors 10. Because of the possibilities of control in the production calibration mode (or any other time period with low power), it is ensured that during this time the temperature at the central processing unit 1 has the same temperature as all the distributed plurality of local temperature sensors 10. Thus, it is possible to use this operation to calibrate the low accuracy distributed plurality of local temperature sensors 10 against a high accuracy central processing unit 1. This can function as a one-time operation during production calibration. There will be substantial improvement in the accuracy of the distributed plurality of local temperature sensors 10, but it may be limited by the one-temperature calibration nature of the process.

In a further embodiment, the central temperature sensor 11 is used for the calibration process, allowing to determine the temperature of the semiconductor chip 20 more accurately. Obtaining a temperature measurement based on the central temperature sensor 11, and comparing that to the result returned by the plurality of local temperature sensors 10, it is possible to adjust for offset or related errors in the plurality of local temperature sensors 10. In other words, in a further embodiment the temperature measurement circuit further comprises a central temperature sensor 11 connected to the central processing unit 1, wherein the calibration step includes a temperature measurement using the central temperature sensor 11.

In a further group of embodiments, the central processing unit 1 is further arranged to execute a differential measurement cycle. The differential measurement cycle is e.g. based on measurement of two closely located local temperature sensors 10 with different temperature dependency characteristics (see below), or by using two different bias currents sequentially to one of the local temperature sensors 10.

In a further, additional or alternative, embodiment, the central processing unit 1 is further arranged to execute a calibration step for all of the plurality of local temperature sensors 10 during a low power mode of operation of the semiconductor chip 20. In e.g. a CIS semiconductor chip 20, low power operating modes are present, and these can be used to repeat the calibration process during actual operation. In this way, the calibration can be performed at the actual ambient operating temperature of the semiconductor chip 20 which may be changing due to other power consuming activity in the system or due to environmental temperature changes. The accuracy will be improved by performing the calibration at a temperature closer to the semiconductor chip 20 operating temperature in a high power mode.

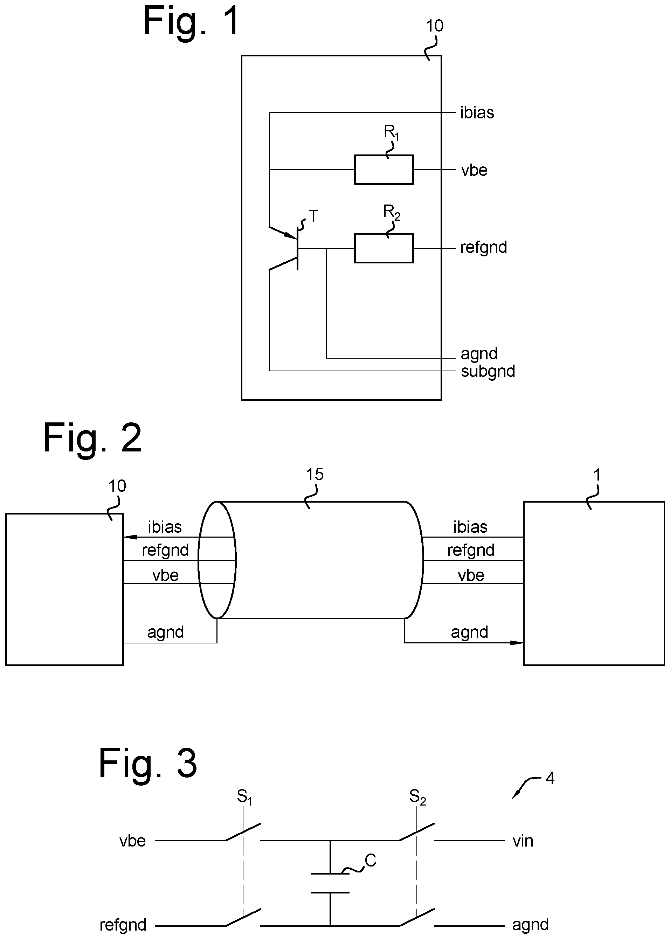

Fig. 1 shows a circuit diagram of an embodiment of a local temperature sensor 10 as applied in present invention embodiments of the temperature measurement circuit. Each temperature sensor 10 is constructed by using a single PNP Bipolar Junction Transistor T.

Each temperature sensor 10 has five terminals (or pins), i.e. an ibias pin connected to the emitter, vbe sense pin connected to the emitter, refgnd sense pin connected to the base, agnd pin connected to the base, and subgnd pin connected to the collector. In this manner, a bias current can be input from the ibias pin into the emitter of the BJT T. The current returns via subgnd connected the collector and via agnd connected to the base of the BJT T. In the application, the agnd and subgnd will be connected to the same ground. To measure the diode voltage accurate, sense lines are used for the emitter voltage (vbe, via resistor R₁) and the base voltage (refgnd, (via resistor R₂). The sensor terminals can then be connected to the central processing unit 1, as shown in Fig. 2, as a simplified circuit diagram of an embodiment of a temperature measurement circuit 1 connected to one local temperature sensor 10.

In an alternative group of embodiments, each of the plurality of local temperature sensors 10 comprises two bipolar junction transistors, BJT 10 with different temperature dependent characteristics. The different temperature dependent characteristics may be obtained by selecting different dimensions of active areas, or different doping levels. This allows to apply the differential measurement cycle.

The differential measurement cycle may be applied using two BJT's with either different BJT area or different current bias. The Vbe voltage on each BJT 10 is related to the ratio of BJT area to the bias current. Due to the area or current bias difference, the two BJT's 10 have a different ratio, which is known as the current density, and have a corresponding different Vbe. The difference in the Vbe, known as a delta Vbe, is related to the log of the current density ratios and is also proportional to absolute temperature. Temperature derived from this type of measurement is typically more accurate compared to a single Vbe measurement.

It is also possible to create a delta Vbe based differential measurement using a single Vbe signal, but with the associated BJT 10 biased with two different bias currents at different periods in time.

In the design of the integrated circuitry of the semiconductor chip 20, the connections between the plurality of local temperature sensors 10 and the central processing unit 1 is obtained using integrated conductors, e.g. in various layers of the IC design. In a further embodiment of the present invention, the integrated wiring structure 15 comprises four conductors (for providing the signals ibias, vbe, refgnd, agnd). The connection between the temperature sensor 10 and central processing unit 1 then only comprises four wires/conductors, i.e. the ibias wire, vbe sense wire, refgnd sense wire, and agnd shield wire. By using sense wires, there is no voltage drop over these wires.

In an even further embodiment, one of the four conductors of the integrated wiring structure 15 is implemented as a shielding conductor (agnd) for the semiconductor chip 20. By using a shielding conductor (or IC wire), connected to agnd, there will be no cross talk between the sense wires and the surrounding environment.

As shown in the schematic diagram of Fig. 4, the ADC converter circuit 4-8 comprises the following sub-circuits: An input multiplexer 4 to select the input to be measured, wherein a sample and hold capacitor is present inside the input multiplexer 4, a ramp generator 5, a comparator 8, a 16-bit counter 6, a 16-bit counter latch 7, and a control logic unit 2.

Thus, in a further embodiment, the ADC circuit 4-8 comprises an input multiplexer 4 for selecting a sensor signal from one of the plurality of local temperature sensors 10 and for converting the sensor signal to a measurement signal. Fig. 3 shows a circuit diagram of a part of a multiplexer circuit 4 as implemented in an exemplary embodiment of the present invention, comprising two switches S1, S2 and a capacitor C. The input multiplexer 4 is arranged to convert the vbe/refgnd voltage from one of the plurality of local temperature sensors 10 to a vin/agnd voltage. This is done by charging a capacitor C towards vbe-refgnd and then mapping that voltage to the input (vin-agnd) of the comparator 8 using the switches S1 and S2 sequentially.

The mode of operation of the slope type ADC circuit 4-8, e.g. under control of the central processing unit 1 (user), is as follows.
- The user first enables the circuit by programming the signals ena (input of control logic circuit 2), ena_bias (input of bias circuit 3) and ena_comp (input to comparator 8).
- The user then selects an input that needs to be converted by programming vin_sel<3:0> (in this case eight local temperature sensors 10 are present selectable via a 3 bit code). If a temperature sensor 10 is selected, the ibias for the BJT 10 will become active. The vbe-refgnd voltage will be stored on the capacitor inside the input multiplexer 4.
- After a predetermined settling time, the user enables the control logic by setting the start signal to control logic circuit 2.
- The control logic circuit 2 will start the ramp generator 5 and the counter 6 at the same time by setting the signals ena_ramp and ena_cnt. By setting ena_ramp, the capacitor C in the input multiplexer 4 will be disconnected from the temperature sensor 10 and connected to the vin-agnd input of the comparator 8.
- When the vramp signal goes above vin, the comparator 8 will toggle.
- When the comparator 8 toggles, the counter latch 7 will store the counter value and the ramp generator 5 will be stopped.
- When the counter value is latched, the ready signal of the control logic unit 2 will indicate that a 16-bit value is available as the 16-bit signal dout<15:0> at the output of the counter latch 7.
- The user can now decide to stop or to measure another input.

In the exemplary embodiment shown in Fig. 4, the bias circuit 3 is arranged to also provide two reference voltages vrefhi and vreflo. Next to the vbe-refgnd inputs, the user can also measure the known reference voltage vrefhi or vreflo. Finally, the user can then calculate what the measured vbe-refgnd voltage is, by using the measured counter values of vrefhi and vreflo.

As such, the bias circuit 3 is a conventional (integrated) circuit, for which the input bias (signal ibias_in) is provided by the reference circuit 9. The output bias currents (ibias<7:0>) are generated e.g. by using current mirrors. The output bias current ibias of the temperature sensor 10 is only provided to the selected temperature sensor 10.

In a further embodiment, a reference circuit 9 is provided, which is connected to the bias circuit 3 for providing a reference current ibias_in, and connected to the ADC circuit 4-8 for providing a reference voltage vref in. This allows to use only a single reference circuit 9 for the entire temperature sensor measurement arrangement. As such, the reference circuit 9 is e.g. a conventional (integrated) circuit, providing a trimmed bias current for the bias circuit 3 (bias_in) and a trimmed reference voltage (vref_in) allowing to provide the voltage signals for the ADC circuit 4-8.

In the above exemplary embodiment, the central processing unit 1 is arranged to measure a signal from only one of the plurality of local temperature sensors 10 during one ramp signal period of the slope-type ADC circuit 4-8. As an alternative, the central processing unit 1 may be arranged to measure two or more of the plurality of local temperature sensors 10 signals during one ramp period of the slope-type ADC circuit 4-8. In even further embodiments, other types of an ADC circuit may be used, such as a direct-conversion ADC circuit, successive approximation circuit, integrating circuit, delta-sigma circuit, etc.

Fig. 5A and 5B show top views of a semiconductor chip 20 in which exemplary embodiments of the present invention are illustrated. According to the invention, the plurality of local temperature sensors 10 is distributed at a perimeter of a semiconductor sensor circuit 21 integrated in the semiconductor chip 20. In the embodiment shown in Fig. 5A, the plurality of local temperature sensors 10 is distributed around the perimeter of the semiconductor sensor circuit 21 with equal spacing, allowing good compensation for the specific function of the semiconductor sensor circuit 21.

In a further group of embodiments, the semiconductor chip 20 comprises one or more integrated circuit parts 22 which during operation generate heat energy, and the plurality of local temperature sensors 10 are distributed unequally. This will allow to obtain a good overview of possible temperature differences or gradients on the semiconductor chip 20 during operation, and enable a proper compensation or correction scheme for the semiconductor sensor circuit 21. As shown in the embodiment of Fig. 5B, the plurality of local temperature sensors 10 are distributed with a higher density near the one or more integrated circuit parts 22. This embodiment will allow to obtain more measurements in an area with a higher (expected) temperature gradient.

In summary, the above described exemplary embodiments of a temperature measurement circuit provide one or more of the following advantages.
- Small temperature sensors 10 can be used which can be easily integrated in the integrated circuit chip design (e.g. only one BJT for each temperature sensor, using only 2 metal layers).
- One central ADC circuit 4-8 is sufficient to measure all the distributed temperature sensors 10.
- One central bias circuit 3 suffices that generates the bias for all distributed temperature sensors.
- Accurate diode voltage measurement can be obtained by using a four-wire bias/sense technique in combination with e.g. a sample & hold circuit in the input multiplexer 4.
- The local temperature sensor 10 only consumes power when selected as input for the measurement.
- The local temperature sensor 10 can be enabled only when no image is being captured by the semiconductor sensor circuit 21, e.g. to avoid light pollution in the image in the case of a CIS sensor.

The present invention has been described above with reference to a number of exemplary embodiments as shown in the drawings. Modifications and alternative implementations of some parts or elements are possible, and are included in the scope of protection as defined in the appended claims.

## Claims

1. A semiconductor chip (20) comprising a semiconductor image sensor circuit (21) and a temperature measurement circuit wherein the temperature measurement circuit is integrated in the semiconductor chip (20) and comprises:
a plurality of local temperature sensors (10); and
a central processing unit (1) connected to the plurality of local temperature sensors (10) via respective integrated wiring structures (15) in the semiconductor chip (20);
the central processing unit (1) comprising:
a control logic unit (2);
an analog-to-digital converter, ADC, circuit (4-8) for providing digital measurement output data;
wherein the control logic unit (2) is connected to the ADC circuit (4-8) and arranged to select one or more of the plurality of local temperature sensors (10) and execute a measurement cycle for the selected one or more of the plurality of local temperature sensors (10), **characterised in that** the plurality of local temperature sensors (10) is distributed at a perimeter of the semiconductor image sensor circuit (21).

2. The semiconductor chip (20) according to claim 1, wherein the central processing unit (1) further comprises a bias circuit (3) connected to the plurality of local temperature sensors (10) and the control logic unit (2), wherein the central processing unit (1) is further arranged to execute a measurement cycle by providing a bias current from the bias circuit (3) to the selected one or more of the plurality of local temperature sensors (10), and measuring a sensor signal from the selected one or more of the plurality of local temperature sensors (10).

3. The semiconductor chip (20) according to claim 2, wherein the central processing unit (1) is further arranged to execute a differential measurement cycle.

4. The semiconductor chip (20) according to any one of claims 1-3, wherein each of the plurality of local temperature sensors (10) comprises a bipolar junction transistor, BJT.

5. The semiconductor chip (20) according to any one of claims 1-3, wherein each of the plurality of local temperature sensor (10) comprises two bipolar junction transistors, BJT with different temperature dependent characteristics.

6. The semiconductor chip (20) according to claim 4 or 5, wherein the BJT is configured as a diode by a connection between base and collector, a bias input terminal (ibias) connected to an emitter of the BJT, a sense terminal (vbe) connected to the emitter of the BJT, a reference ground terminal (refgnd) connected to the base of the BJT, a first ground terminal (agnd) connected to the base of the BJT, and a second ground terminal (subgnd) connected to the collector of the BJT.

7. The semiconductor chip (20) according to any one of claims 1-6, wherein the central processing unit (1) is further arranged to execute a calibration step for all of the plurality of local temperature sensors (10) during a production calibration mode of operation of the semiconductor chip (20).

8. The semiconductor chip (20) according to any one of claims 1-6, wherein the central processing unit (1) is further arranged to execute a calibration step for all of the plurality of local temperature sensors (10) during a low power mode of operation of the semiconductor chip (20).

9. The semiconductor chip (20) according to claim 7 or 8, further comprising a central temperature sensor (11) connected to the central processing unit (1), wherein the calibration step includes a temperature measurement using the central temperature sensor (11).

10. The semiconductor chip (20) according to any one of claims 1-9, wherein the integrated wiring structure (15) comprises four conductors (ibias, vbe, refgnd, agnd).

11. The semiconductor chip (20) according to claim 10, wherein one of the four conductors (agnd) of the integrated wiring structure (15) is implemented as a shielding conductor for the semiconductor chip (20).

12. The semiconductor chip (20) according to any one of claims 1-11 wherein the semiconductor chip (20) further comprises one or more integrated circuit parts (22) which during operation generate heat energy, and the plurality of local temperature sensors (10) are distributed unequally.

13. The semiconductor chip (20) according to claim 12, wherein the plurality of local temperature sensors (10) are distributed with a higher density near the one or more integrated circuit parts (22).

14. The semiconductor chip (20) according to any one of claims 1-11, wherein the ADC circuit (4-8) comprises an input multiplexer (4) for selecting a sensor signal from one of the plurality of local temperature sensors (10) and for converting the sensor signal to a measurement signal.

## Patentansprüche

1. Halbleiterchip (20), der einen Halbleiterbildsensorschaltkreis (21) und einen Temperaturmessschaltkreis umfasst, wobei der Temperaturmessschaltkreis in den Halbleiterchip (20) integriert ist und Folgendes umfasst:
eine Vielzahl lokaler Temperatursensoren (10); und
eine zentrale Verarbeitungseinheit (1), die über entsprechende integrierte Verdrahtungsstrukturen (15) in dem Halbleiterchip (20) mit der Vielzahl lokaler Temperatursensoren (10) verbunden ist;
wobei die zentrale Verarbeitungseinheit (1) Folgendes umfasst:
eine Steuerlogikeinheit (2);
einen Analog-Digital-Wandler(ADC)-Schaltkreis (4-8) zum Bereitstellen digitaler Messausgangsdaten;
wobei die Steuerlogikeinheit (2) mit dem ADC-Schaltkreis (4-8) verbunden und angeordnet ist, um einen oder mehrere der Vielzahl lokaler Temperatursensoren (10) auszuwählen und einen Messzyklus für den einen oder die mehreren ausgewählten der Vielzahl lokaler Temperatursensoren (10) auszuführen, **gekennzeichnet dadurch, dass** die Vielzahl lokaler Temperatursensoren (10) an einem Umfang des Halbleiterbildsensorschaltkreises (21) verteilt sind.

2. Halbleiterchip (20) nach Anspruch 1, wobei die zentrale Verarbeitungseinheit (1) ferner einen Vorspannungsschaltkreis (3) umfasst, der mit der Vielzahl lokaler Temperatursensoren (10) und der Steuerlogikeinheit (2) verbunden ist, wobei die zentrale Verarbeitungseinheit (1) ferner angeordnet ist, um einen Messzyklus durch Bereitstellen eines Vorspannungsstroms von dem Vorspannungsschaltkreis (3) an den einen oder die mehreren ausgewählten der Vielzahl lokaler Temperatursensoren (10) auszuführen und ein Sensorsignal von dem einen oder den mehreren ausgewählten der Vielzahl lokaler Temperatursensoren (10) zu messen.

3. Halbleiterchip (20) nach Anspruch 2, wobei die zentrale Verarbeitungseinheit (1) ferner angeordnet ist, um einen Differenzmesszyklus auszuführen.

4. Halbleiterchip (20) nach einem der Ansprüche 1-3, wobei jeder der Vielzahl lokaler Temperatursensoren (10) einen Bipolartransistor, BJT, umfasst.

5. Halbleiterchip (20) nach einem der Ansprüche 1-3, wobei jeder der Vielzahl lokaler Temperatursensoren (10) zwei Bipolartransistoren, BJT mit unterschiedlichen temperaturabhängigen Eigenschaften umfasst.

6. Halbleiterchip (20) nach Anspruch 4 oder 5, wobei der BJT durch eine Verbindung zwischen Basis und Kollektor, einen Vorspannungseingangsanschluss (ibias), der mit einem Emitter des BJT verbunden ist, einen Sense-Anschluss (vbe), der mit dem Emitter des BJT verbunden ist, einen Referenzerdungsanschluss (refgnd), der mit der Basis des BJT verbunden ist, einen ersten Erdungsanschluss (agnd), der mit der Basis des BJT verbunden ist, und einen zweiten Erdungsanschluss (subgnd), der mit dem Kollektor des BJT verbunden ist, als Diode konfiguriert ist.

7. Halbleiterchip (20) nach einem der Ansprüche 1-6, wobei die zentrale Verarbeitungseinheit (1) ferner angeordnet ist, um einen Kalibrierschritt für alle der Vielzahl lokaler Temperatursensoren (10) während eines Produktionskalibrierbetriebsmodus des Halbleiterchips (20) auszuführen.

8. Halbleiterchip (20) nach einem der Ansprüche 1-6, wobei die zentrale Verarbeitungseinheit (1) ferner angeordnet ist, um einen Kalibrierschritt für alle der Vielzahl lokaler Temperatursensoren (10) während eines Niedrigleistungsbetriebsmodus des Halbleiterchips (20) auszuführen.

9. Halbleiterchip (20) nach Anspruch 7 oder 8, der ferner einen zentralen Temperatursensor (11) umfasst, der mit der zentralen Verarbeitungseinheit (1) verbunden ist, wobei der Kalibrierschritt eine Temperaturmessung unter Verwenden des zentralen Temperatursensors (11) enthält.

10. Halbleiterchip (20) nach einem der Ansprüche 1-9, wobei die integrierte Verdrahtungsstruktur (15) vier Leiter (ibias, vbe, refgnd, agnd) umfasst.

11. Halbleiterchip (20) nach Anspruch 10, wobei einer der vier Leiter (agnd) der integrierten Verdrahtungsstruktur (15) als Abschirmleiter für den Halbleiterchip (20) implementiert ist.

12. Halbleiterchip (20) nach einem der Ansprüche 1-11, wobei der Halbleiterchip (20) ferner einen oder mehrere integrierte Schaltkreisteile (22) umfasst, die während des Betriebs Wärmeenergie erzeugen, und wobei die Vielzahl lokaler Temperatursensoren (10) ungleich verteilt sind.

13. Halbleiterchip (20) nach Anspruch 12, wobei die Vielzahl lokaler Temperatursensoren (10) mit einer höheren Dichte in der Nähe des einen oder der mehreren integrierten Schaltkreisteile (22) verteilt sind.

14. Halbleiterchip (20) nach einem der Ansprüche 1-11, wobei der ADC-Schaltkreis (4-8) einen Eingangsmultiplexer (4) zum Auswählen eines Sensorsignals von einem der Vielzahl lokaler Temperatursensoren (10) und zum Umwandeln des Sensorsignals in ein Messsignal umfasst.

## Revendications

1. Puce semi-conductrice (20) comprenant un circuit de capteur d'images semi-conducteur (21) et un circuit de mesure de température où le circuit de mesure de température est intégré dans la puce semi-conductrice (20) et comprend :
une pluralité de capteurs de température locaux (10) ; et
une unité centrale de traitement (1) connectée à la pluralité de capteurs de température locaux (10) via des structures de câblage intégrées respectives (15) dans la puce semi-conductrice (20) ;
l'unité centrale de traitement (1) comprenant :
une unité logique de commande (2) ;
un circuit convertisseur analogique-numérique, CAN, (4-8) pour fournir des données de sortie de mesure numériques ;
où l'unité logique de commande (2) est connectée au circuit CAN (4-8) et conçue pour sélectionner un ou plusieurs de la pluralité de capteurs de température locaux (10) et exécuter un cycle de mesure pour l'un ou plusieurs sélectionnés de la pluralité de capteurs de température locaux (10), **caractérisé en ce que** la pluralité de capteurs de température locaux (10) est distribuée sur un périmètre du circuit de capteur d'images semi-conducteur (21).

2. Puce semi-conductrice (20) selon la revendication 1, où l'unité centrale de traitement (1) comprend en outre un circuit de polarisation (3) connecté à la pluralité de capteurs de température locaux (10) et à l'unité logique de commande (2), où l'unité centrale de traitement (1) est en outre conçue pour exécuter un cycle de mesure en fournissant un courant de polarisation du circuit de polarisation (3) à l'un ou plusieurs sélectionnés de la pluralité de capteurs de température locaux (10), et en mesurant un signal de capteur provenant de l'un ou plusieurs sélectionnés de la pluralité de capteurs de température locaux (10).

3. Puce semi-conductrice (20) selon la revendication 2, où l'unité centrale de traitement (1) est en outre conçue pour exécuter un cycle de mesure différentielle.

4. Puce semi-conductrice (20) selon l'une quelconque des revendications 1 à 3, où chacun de la pluralité de capteurs de température locaux (10) comprend un transistor à jonction bipolaire, BJT.

5. Puce semi-conductrice (20) selon l'une quelconque des revendications 1 à 3, où chacun de la pluralité de capteurs de température locaux (10) comprend deux transistors à jonction bipolaire, BJT, avec des caractéristiques différentes dépendantes de la température.

6. Puce semi-conductrice (20) selon la revendication 4 ou 5, où le BJT est configuré comme une diode par une connexion entre base et collecteur, une borne d'entrée de polarisation (ibias) connectée à un émetteur du BJT, une borne de détection (vbe) connectée à l'émetteur du BJT, une borne de masse de référence (refgnd) connectée à la base du BJT, une première borne de masse (agnd) connectée à la base du BJT, et une deuxième borne de masse (subgnd) connectée au collecteur du BJT.

7. Puce semi-conductrice (20) selon l'une quelconque des revendications 1 à 6, où l'unité centrale de traitement (1) est en outre conçue pour exécuter une étape d'étalonnage pour l'ensemble de la pluralité de capteurs de température locaux (10) pendant un mode d'étalonnage de production de fonctionnement de la puce semi-conductrice (20).

8. Puce semi-conductrice (20) selon l'une quelconque des revendications 1 à 6, où l'unité centrale de traitement (1) est en outre conçue pour exécuter une étape d'étalonnage pour l'ensemble de la pluralité de capteurs de température locaux (10) pendant un mode de faible puissance de fonctionnement de la puce semi-conductrice (20).

9. Puce semi-conductrice (20) selon la revendication 7 ou 8, comprenant en outre un capteur de température central (11) connecté à l'unité centrale de traitement (1), où l'étape d'étalonnage inclut une mesure de température en utilisant le capteur de température central (11).

10. Puce semi-conductrice (20) selon l'une quelconque des revendications 1 à 9, où la structure de câblage intégrée (15) comprend quatre conducteurs (ibias, vbe, refgnd, agnd).

11. Puce semi-conductrice (20) selon la revendication 10, où l'un des quatre conducteurs (agnd) de la structure de câblage intégrée (15) est implémenté comme un conducteur de blindage pour la puce semi-conductrice (20).

12. Puce semi-conductrice (20) selon l'une quelconque des revendications 1 à 11, où la puce semi-conductrice (20) comprend en outre une ou plusieurs parties de circuit intégré (22) qui, pendant le fonctionnement, génèrent de l'énergie thermique, et la pluralité de capteurs de température locaux (10) sont distribués de façon inégale.

13. Puce semi-conductrice (20) selon la revendication 12, où la pluralité de capteurs de température locaux (10) sont distribués avec une densité plus élevée près de l'une ou plusieurs parties de circuit intégré (22).

14. Puce semi-conductrice (20) selon l'une quelconque des revendications 1 à 11, où le circuit CAN (4-8) comprend un multiplexeur d'entrée (4) pour sélectionner un signal de capteur de l'un de la pluralité de capteurs de température locaux (10) et pour convertir le signal de capteur en un signal de mesure.
